# EUROPEAN PATENT APPLICATION

(11) **EP 4 610 878 A1**
(43) Date of publication of application: **03.09.2025**
(21) Application number: 25160134.0
(22) Date of filing: 26.02.2025
(51) Int. Cl.: G06F 40/284, G06F 40/237

(54) **CHARACTER STRING DIVIDING APPARATUS, CHARACTER STRING DIVIDING SYSTEM, VOCABULARY GROUP GENERATING METHOD, AND CARRIER MEDIUM**

(30) Priority: 29.02.2024 JP 2024030164
(71) Applicant: Ricoh Company, Ltd., Tokyo 143-8555 (JP)
(72) Inventor: NAKASHIMA, Dai, Tokyo, 143-8555 (JP); NOZAKI, Yuta, Tokyo, 143-8555 (JP); ASABA, Naoki, Tokyo, 143-8555 (JP); KAWAMURA, Shintaro, Tokyo, 143-8555 (JP); SATO, Ryo, Tokyo, 143-8555 (JP)
(74) Representative: SSM Sandmair

(57) **Abstract**

A character string dividing apparatus includes a generation unit (103), an acquisition unit (101), an acquisition unit (101), and a character string dividing unit (110-1). The generation unit (103) generates a new vocabulary group based on an existing vocabulary group including a plurality of vocabularies each being associated with an identifier. The character string dividing unit (110-1) divides a character string into a plurality of vocabularies based on at least one of the existing and the new vocabulary group. In generating the new vocabulary group, the generation unit (103) determines whether a vocabulary of a plurality of vocabularies in the new vocabulary group is commonly in the existing and the new vocabulary group, and associates an embedding vector associated with the vocabulary in the existing vocabulary group with the vocabulary in the new vocabulary group without changing the embedding vector.

## Description

### BACKGROUND

### Technical Field

The present disclosure relates to a character string dividing apparatus, a character string dividing system, a vocabulary group generating method, and a carrier medium.

### Related Art

A technique has been proposed in which a vocabulary of a specific language is added to an existing model included in a tokenizer in order to cause the model to support the specific language.

### SUMMARY

Embodiments of the present disclosure described herein provide a novel character string dividing apparatus including a generation unit, an acquisition unit, a character string dividing unit, and an output unit. The generation unit generates a new vocabulary group based on an existing vocabulary group. The existing vocabulary group includes a plurality of vocabularies each being associated with an identifier. The acquisition unit acquires a character string. The character string dividing unit divides the character string into a plurality of vocabularies based on at least one of the existing vocabulary group and the new vocabulary group. The output unit outputs the plurality of vocabularies of the character string. In generating the new vocabulary group, the generation unit determines whether a vocabulary of a plurality of vocabularies included in the new vocabulary group is commonly included in the existing vocabulary group and the new vocabulary group, and associates an embedding vector associated with the vocabulary included in the existing vocabulary group with the vocabulary included in the new vocabulary group without changing the embedding vector based on a determination indicating that the vocabulary is commonly included in the existing vocabulary group and the new vocabulary group.

Embodiments of the present disclosure described herein provide a novel character string dividing system including a generation unit, an acquisition unit, a character string dividing unit, and an output unit. The generation unit generates a new vocabulary group based on an existing vocabulary group. The existing vocabulary group includes a plurality of vocabularies each being associated with an identifier. The acquisition unit acquires a character string. The character string dividing unit divides the character string into a plurality of vocabularies based on at least one of the existing vocabulary group and the new vocabulary group. The output unit outputs the plurality of vocabularies of the character string. In generating the new vocabulary group, the generation unit determines whether a vocabulary of a plurality of vocabularies included in the new vocabulary group is commonly included in the existing vocabulary group and the new vocabulary group, and associates an embedding vector associated with the vocabulary included in the existing vocabulary group with the vocabulary included in the new vocabulary group without changing the embedding vector based on a determination indicating that the vocabulary is commonly included in the existing vocabulary group and the new vocabulary group.

Embodiments of the present disclosure described herein provide a novel method for generating a vocabulary group. The method includes: generating a new vocabulary group based on an existing vocabulary group including a plurality of vocabularies each being associated with an identifier, the new vocabulary group being used when a character string is divided into a plurality of vocabularies. In generating the new vocabulary group, the method includes: determining whether a vocabulary among a plurality of vocabularies included in the new vocabulary group is commonly included in the existing vocabulary group and the new vocabulary group; and associating an embedding vector associated with the vocabulary included in the existing vocabulary group with the vocabulary included in the new vocabulary group without changing the embedding vector based on a determination indicating that the vocabulary is commonly included in the existing vocabulary group and the new vocabulary group.

Embodiments of the present disclosure described herein provide a novel carrier medium storing computer-readable program code that, when executed by a computer, causes the computer to perform the above-described method for generating a vocabulary group.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a system configuration of a character string dividing system according to an embodiment of the present disclosure;
FIG. 2 is a diagram illustrating a hardware configuration of a server according to an embodiment of the present disclosure;
FIG. 3 is a functional block diagram of a server according to an embodiment of the present disclosure;
FIG. 4 is another functional block diagram of a server according to an embodiment of the present disclosure;
FIG. 5 is a conceptual diagram illustrating character string dividing processing by a tokenizer included in a server according to an embodiment of the present disclosure;
FIG. 6 is a conceptual diagram illustrating generation processing performed by a generation unit included in a server according to an embodiment of the present disclosure;
FIG. 7 is a diagram illustrating generation processing performed by a generation unit included in a server according to an embodiment of the present disclosure;
FIG. 8 is a flowchart of a procedure of generation processing performed by a generation unit included in a server according to an embodiment of the present disclosure;
FIG. 9 is a diagram illustrating a first example of a vocabulary group included in a server according to an embodiment of the present disclosure;
FIG. 10 is a diagram illustrating a second example of a vocabulary group included in a server according to an embodiment of the present disclosure;
FIG. 11 is a flowchart of a procedure of vector setting processing performed by the generation unit included in the server according to an embodiment of the present disclosure;
FIG. 12 is a diagram illustrating vector setting processing performed by a generation unit included in a server according to an embodiment of the present disclosure;
FIG. 13 is a diagram illustrating a first example of a configuration of cooperation between a tokenizer and a machine learning model included in a server according to an embodiment of the present disclosure; and
FIG. 14 is a diagram illustrating a second example of a configuration of cooperation between a tokenizer and a machine learning model included in a server according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below of embodiments of the present disclosure with reference to the drawings.

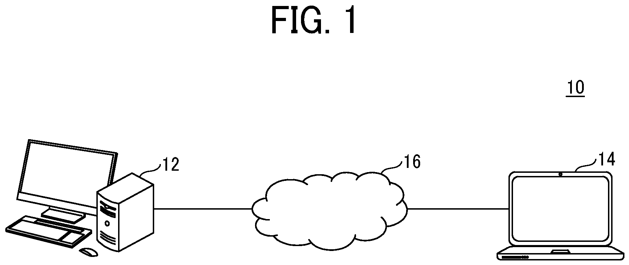

FIG. 1 is a diagram illustrating a system configuration of a character string dividing system 10 according to an embodiment of the present disclosure.

The character string dividing system 10 illustrated in FIG. 1 includes a server 12 and a personal computer (PC) 14. The server 12 and the PC 14 are communicably connected to each other through a communication network 16. The communication network 16 is, for example, a local area network (LAN) or the Internet.

The PC 14 is an example of a terminal apparatus. The PC 14 includes an input device for inputting a string of characters. Examples of the input device include, but not limited to, a keyboard and a touch screen. The PC 14 transmits a character string input by the user using the input device to the server 12 through the communication network 16. The PC 14 may have a voice recognition function of recognizing a voice input from a microphone by the user. In this case, the PC 14 may transmit a character string recognized by the voice recognition function to the server 12.

The server 12 is an example of a character string dividing apparatus. The server 12 receives the character string transmitted from the PC 14 through the communication network 16, and performs the character string dividing processing to divide the character string into multiple vocabularies. The server 12 outputs the multiple vocabularies acquired by the character string dividing processing to the PC 14 through the communication network 16.

The PC 14 receives the multiple vocabularies (i.e., the multiple vocabularies acquired by the character string dividing processing) transmitted from the server 12 through the communication network 16 and perform various processes using the multiple vocabularies.

In the example illustrated in FIG. 1, one terminal apparatus (PC 14) is connected to the server 12 through the communication network 16. However, in actuality, in the character string dividing system 10, multiple terminal apparatuses may be connected to the server 12 through the communication network 16, and a character string may be transmitted to the server 12 from each of the multiple terminal apparatuses.

In the example illustrated in FIG. 1, the PC 14 is used as an example of a terminal apparatus for inputting a character string. However, the terminal apparatus is not limited thereto, and may be another device (e.g., a smartphone, a tablet device, an electronic whiteboard, an inkjet printer, a multifunction peripheral (MFP), a video conference device, a projector, or a spherical imaging device) as long as the device can at least input and transmit a character string.

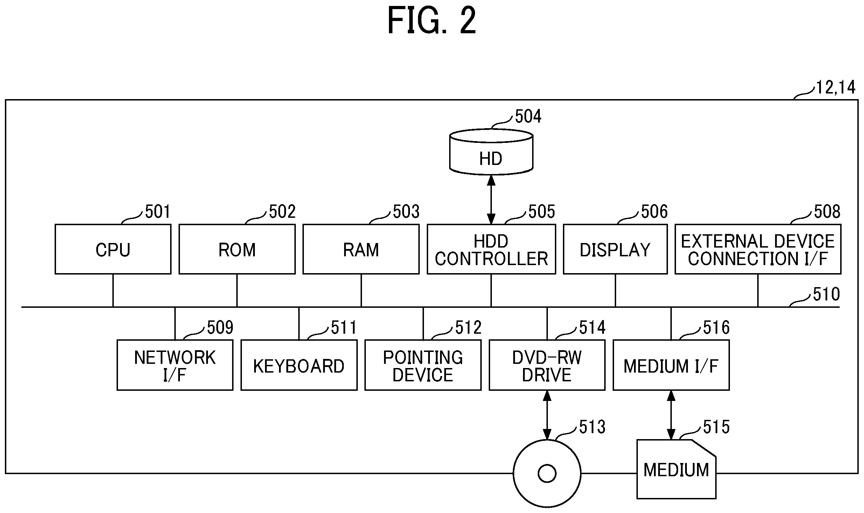

FIG. 2 is a diagram illustrating a hardware configuration of the server 12 and the PC 14 according to an embodiment of the present disclosure. A description is given below of the hardware configuration common to the server 12 and the PC 14.

As illustrated in FIG. 2, each of the server 12 and the PC 14 is implemented by a computer. The computer includes a central processing unit (CPU) 501, a read-only memory (ROM) 502, a random-access memory (RAM) 503, a hard disk (HD) 504, a hard disk drive (HDD) controller 505, a display 506, an external device connection interface (I/F) 508, a network I/F 509, a data bus 510, a keyboard 511, a pointing device 512, a digital versatile disk rewritable (DVD-RW) drive 514, and a medium I/F 516.

The CPU 501 controls the overall operation of the server 12 or the PC 14. The ROM 502 stores programs such as an initial program loader (IPL) to boot the CPU 501. The RAM 503 is used as a work area for the CPU 501. The HD 504 stores various data such as a program. The HDD controller 505 controls the reading and writing of various data from and to the HD 504 under the control of the CPU 501. The display 506 displays various information such as a cursor, a menu, a window, a character, or an image. The external device connection I/F 508 is an interface for connecting the computer 500 to various external devices. In this case, the external devices include, but not limited to, a universal serial bus (USB) memory and a printer. The network I/F 509 is an interface that controls data communication performed with an external device through the communication network 16. The data bus 510 is, for example, an address bus or a data bus, which electrically couples the components illustrated in FIG. 2, such as the CPU 501.

The keyboard 511 is an input device provided with multiple keys for allowing the user to input characters, numerals, or various instructions. The pointing device 512 is an example of an input device that allows the user to select or execute a specific instruction, select a target for processing, or move a cursor being displayed. The DVD-RW drive 514 controls reading and writing of various data from and to a DVD-RW 513, which is an example of a removable storage medium. The DVD-RW is one example of the removable storage medium. In another example, a digital versatile disk recordable (DVD-R) may be used as the removable storage medium. The medium I/F 516 controls reading and writing (storing) of data from and to a storage medium 515 such as a flash memory.

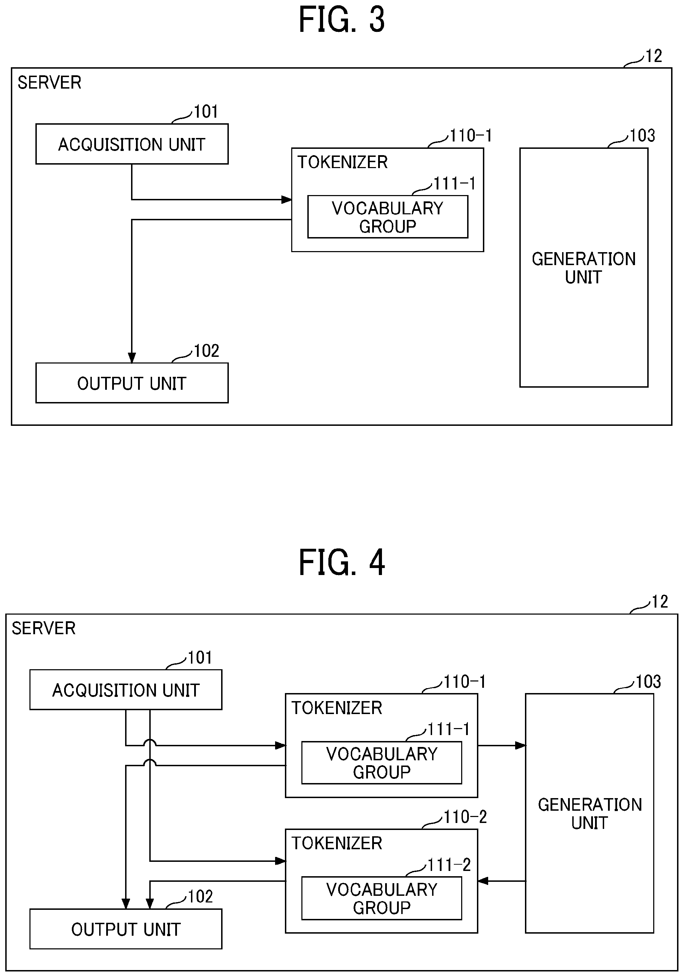

FIGS. 3 and 4 are functional block diagrams of the server 12 according to an embodiment of the present disclosure. FIG. 3 is the functional block diagram of the server 12 before a tokenizer 110-2 is generated. FIG. 4 is the functional block diagram of the server 12 after the tokenizer 110-2 has been generated.

As illustrated in FIG. 3, the server 12, which is in a state before the tokenizer 110-2 is generated, includes an acquisition unit 101, an output unit 102, a generation unit 103, and a tokenizer 110-1.

The acquisition unit 101 acquires a character string that is transmitted from the PC 14 and received by the server 12 through the communication network 16 as a character string to be processed by the character string dividing processing.

The tokenizer 110-1 is an example of a character string dividing unit. The tokenizer 110-1 includes a vocabulary group 111-1. The vocabulary group 111-1 is an example of an existing vocabulary group. The vocabulary group 111-1 includes multiple vocabularies associated with identifiers. The vocabulary group 111-1 is implemented by, for example, a JavaScript^{®} object notation (JSON) file. The tokenizer 110-1 performs the character string dividing processing (i.e., tokenization processing) using an existing technique on the character string acquired by the acquisition unit 101 based on the vocabulary group 111-1 to divide the character string acquired by the acquisition unit 101 into multiple vocabularies (i.e., multiple morphemes).

The output unit 102 outputs the multiple vocabularies acquired by the tokenizer 110-1. The multiple vocabularies outputted by the output unit 102 are transmitted to the PC 14 by the server 12 through the communication network 16.

The generation unit 103 generates a new tokenizer 110. For example, the generation unit 103 generates a tokenizer 110-2 as illustrated in FIG. 4 as a new tokenizer 110 for the server 12 including the tokenizer 110-1 as illustrated in FIG. 3. At this time, the generation unit 103 generates a vocabulary group 111-2 included in the tokenizer 110-2 based on the vocabulary group 111-1 included in the tokenizer 110-1.

As illustrated in FIG. 4, the server 12, which is in a state after the tokenizer 110-2 has been generated, further includes the tokenizer 110-2 in addition to the server 12 illustrated in FIG. 3.

The tokenizer 110-2 is another example of the character string dividing unit. The tokenizer 110-2 includes the vocabulary group 111-2. The vocabulary group 111-2 is an example of a new vocabulary group. The vocabulary group 111-2 includes multiple vocabularies associated with identifiers. The vocabulary group 111-2 is implemented by, for example, a JSON file. The tokenizer 110-2 performs the character string dividing processing using an existing technique on the character string acquired by the acquisition unit 101 based on the vocabulary group 111-2 to divide the character string acquired by the acquisition unit 101 into multiple vocabularies (i.e., multiple morphemes).

The server 12 illustrated in FIG. 4 includes the tokenizer 110-1 and the tokenizer 110-2. Accordingly, the server 12 illustrated in FIG. 4 allows the user to select either the tokenizer 110-1 or the tokenizer 110-2 as the tokenizer to be used for the character string dividing processing.

Alternatively, the server 12 illustrated in FIG. 4 may automatically select one of the tokenizer 110-1 and the tokenizer 110-2 as the tokenizer to be used for the character string dividing processing based on a predetermined determination condition (e.g., whether the character string acquired by the acquisition unit 101 is English or Japanese).

Alternatively, the server 12 illustrated in FIG. 4 may use the new tokenizer 110-2 as the tokenizer used for the character string dividing processing and may not use the existing tokenizer 110-1.

In the server 12 illustrated in FIG. 4, when the tokenizer 110-1 is selected, the tokenizer 110-1 performs the character string dividing processing on the character string acquired by the acquisition unit 101 based on the vocabulary group 111-1.

In the server 12 illustrated in FIG. 4, when the tokenizer 110-2 is selected, the tokenizer 110-2 performs the character string dividing processing on the character string acquired by the acquisition unit 101 based on the vocabulary group 111-2.

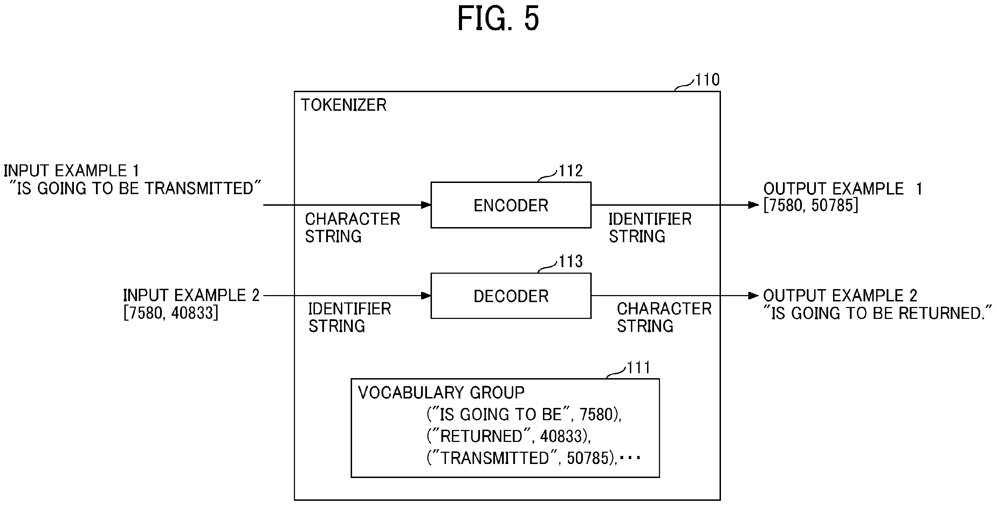

FIG. 5 is a conceptual diagram illustrating the character string dividing processing by the tokenizer 110 included in the server 12 according to an embodiment of the present disclosure.

As illustrated in FIG. 5, the tokenizer 110 includes a vocabulary group 111, an encoder 112, and a decoder 113.

The vocabulary group 111 includes multiple vocabularies associated with identifiers.

The encoder 112 performs the character string dividing processing on the input character string based on the vocabulary group 111 to divide the input character string into multiple vocabularies and output the multiple vocabularies.

For example, in the example illustrated in FIG. 5, when a character string "is going to be transmitted" is input as an input example 1, the encoder 112 divides the character string "is going to be transmitted" into the vocabulary "is going to be" and the vocabulary "transmitted" based on the vocabulary group 111, and outputs an identifier string "[7580, 50785]" including identifiers of the multiple vocabularies as an output example 1.

The decoder 113 performs character string combining processing on the multiple input vocabularies based on the vocabulary group 111 to combine the multiple input vocabularies to generate a character string and output the character string.

For example, in the example illustrated in FIG. 5, when the identifier string "[7580, 40833]" is input as an input example 2, the decoder 113 combines the vocabulary "returned" corresponding to the identifier [40833] and the vocabulary "is going to be" corresponding to the identifier [7580] based on the vocabulary group 111 to generate a character string "is going to be returned," and outputs the character string "is going to be returned" as an output example 2.

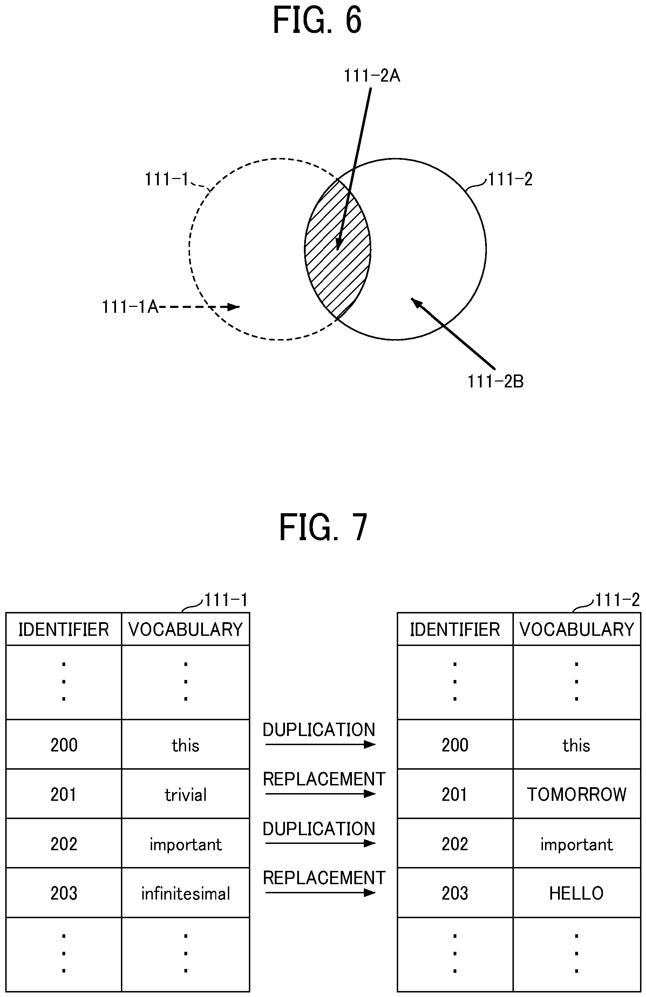

FIG. 6 is a conceptual diagram illustrating generation processing performed by the generation unit 103 included in the server 12 according to an embodiment of the present disclosure.

As illustrated in FIG. 6, when the generation unit 103 generates the tokenizer 110-2, the generation unit 103 generates the new vocabulary group 111-2 included in the tokenizer 110-2 based on the existing vocabulary group 111-1 included in the tokenizer 110-1.

Specifically, the generation unit 103 copies the vocabularies included in a common vocabulary group 111-2A that includes the vocabularies commonly included in the existing vocabulary group 111-1 and the new vocabulary group 111-2 to the new vocabulary group 111-2 without changing the identifiers.

The generation unit 103 assigns any identifiers to vocabularies that are not included in the common vocabulary group 111-2A with the existing vocabulary group 111-1 (i.e., vocabularies included in a non-common vocabulary group 111-2B with the existing vocabulary group 111-1) among the multiple vocabularies included in the new vocabulary group 111-2 and adds the vocabularies to the new vocabulary group 111-2.

Thus, the generation unit 103 can efficiently generate the new vocabulary group 111-2 based on the existing vocabulary group 111-1 without newly generating the new vocabulary group 111-2.

When the generation unit 103 generates the new vocabulary group 111-2, the generation unit 103 does not include a non-common vocabulary group 111-1A of the existing vocabulary group 111-1 in the new vocabulary group 111-2. In other words, the generation unit 103 does not simply add the non-common vocabulary group 111-2B to the existing vocabulary group 111-1. Accordingly, the generation unit 103 can reduce the expansion of the data size of the new vocabulary group 111-2.

Since the generation unit 103 reuses the identifiers used for the non-common vocabulary group 111-1A of the existing vocabulary group 111-1 for the non-common vocabulary group 111-2B of the new vocabulary group 111-2, the generation unit 103 does not need to assign new identifiers. As a result, the generation unit 103 can reduce the expansion of the data size of the new vocabulary group 111-2.

FIG. 7 is a diagram illustrating the generation processing performed by the generation unit 103 included in the server 12 according to an embodiment of the present disclosure.

As illustrated in FIG. 7, the generation unit 103 copies the vocabulary "this" and the vocabulary "important" included in the common vocabulary group 111-2A, which is common to the new vocabulary group 111-2 and the existing vocabulary group 111-1 among the multiple vocabularies included in the new vocabulary group 111-2, to the new vocabulary group 111-2 without changing the identifiers ("200" and "202"). Thus, the generation unit 103 can efficiently generate the new vocabulary group 111-2 based on the existing vocabulary group 111-1 without newly generating the new vocabulary group 111-2.

As illustrated in FIG. 7, the generation unit 103 adds the vocabulary "tomorrow" and the vocabulary "hello", which are not included in the common vocabulary group 111-2A with the existing vocabulary group 111-1, among the multiple vocabularies included in the new vocabulary group 111-2 to the new vocabulary group 111-2 and reuses the identifiers ("201" and "203") used in the non-common vocabulary group 111-1A of the existing vocabulary group 111-1 (i.e., replacing the vocabularies of the identifiers). Accordingly, the generation unit 103 does not need to assign new identifiers, and thus, the generation unit 103 can reduce the expansion of the data size of the new vocabulary group 111-2.

In other words, the generation unit 103 can prevent the number of identifiers of the new vocabulary group 111-2 from increasing over the number of identifiers of the existing vocabulary group 111-1. As a result, the generation unit 103 can prevent the number of identifiers of a large language model (LLM) corresponding to the new vocabulary group 111-2 from increasing over the number of identifiers of the LLM corresponding to the existing vocabulary group 111-1, and thus, the generation unit 103 can reduce the increasing of memory cost related to the LLM corresponding to the new vocabulary group 111-2.

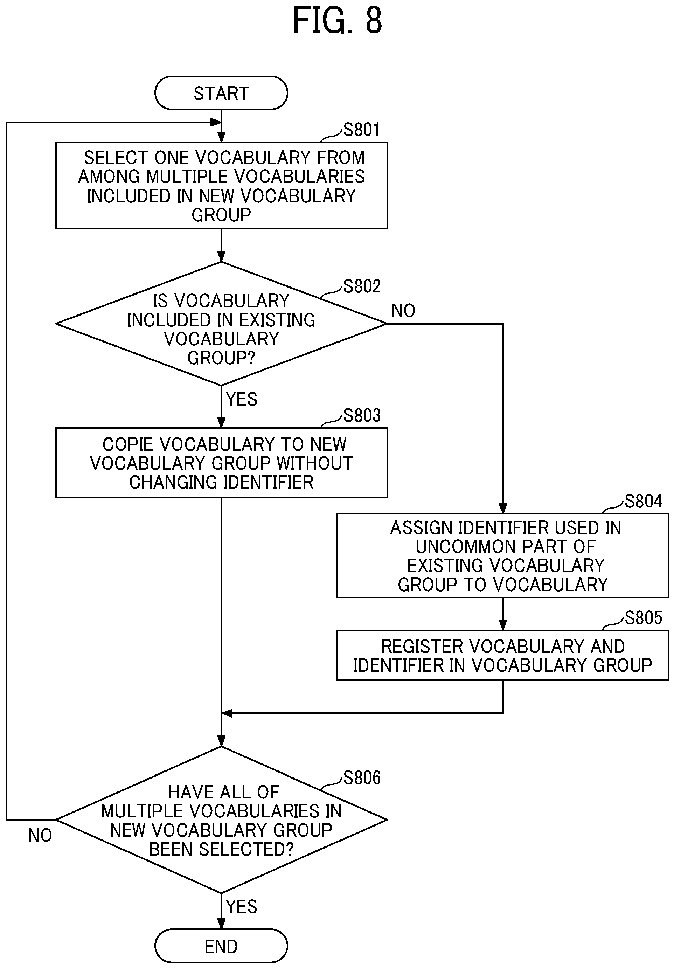

FIG. 8 is a flowchart of a procedure of the generation processing performed by the generation unit 103 included in the server 12 according to an embodiment of the present disclosure.

In step S801, the generation unit 103 selects one vocabulary from among multiple vocabularies included in the new vocabulary group 111-2.

Subsequently, in step S802, the generation unit 103 determines whether the vocabulary selected in step S801 is included in the existing vocabulary group 111-1.

In step S803, when the generation unit 103 determines that the vocabulary selected in step S801 is included in the existing vocabulary group 111-1 in step S802 (YES in step S802), the generation unit 103 copies the vocabulary selected in step S801 to the new vocabulary group 111-2 without changing the identifier of the vocabulary. Then, the generation unit 103 proceeds the operation to step S806.

In step S804, when it is determined that the vocabulary selected in step S801 is not included in the existing vocabulary group 111-1 in step S802 (NO in step S802), the generation unit 103 assigns the identifier used in the non-common vocabulary group 111-1A of the existing vocabulary group 111-1 to the vocabulary selected in step S801. Then, in step S805, the generation unit 103 registers the vocabulary selected in step S801 and the identifier assigned in step S804 in the new vocabulary group 111-2. Then, the generation unit 103 proceeds the operation to step S806.

In step S806, the generation unit 103 determines whether all of the multiple vocabularies included in the new vocabulary group 111-2 have been selected.

When the generation unit 103 determines that all of the multiple vocabularies included in the new vocabulary group 111-2 have not been selected in step S806 (NO in step S806), the generation unit 103 returns the operation to step S801.

When the generation unit 103 determines that all of the multiple vocabularies included in the new vocabulary group 111-2 have been selected in step S806 (YES in step S806), the generation unit 103 ends the series of processing illustrated in FIG. 8.

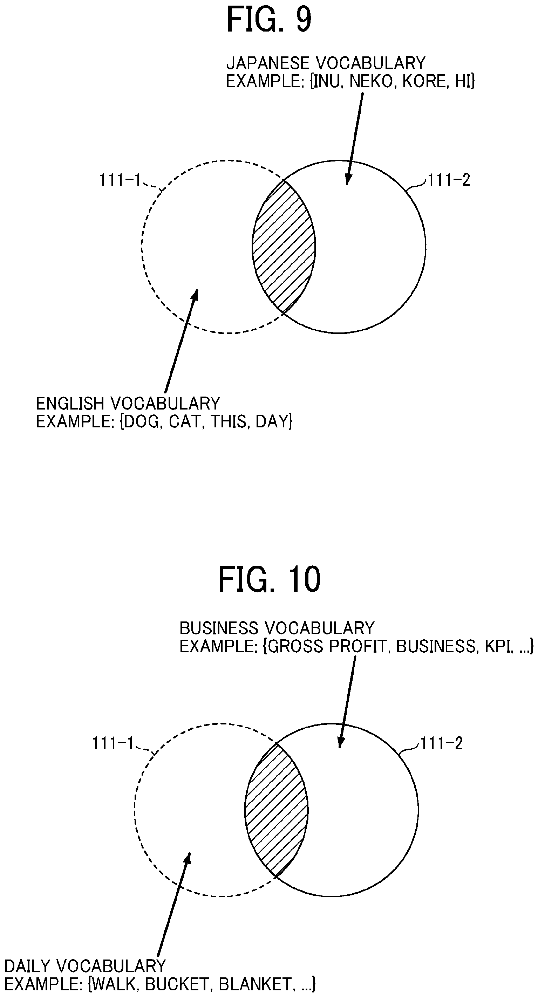

FIG. 9 is a diagram illustrating a first example of the vocabulary group 111-1 and the vocabulary group 111-2 included in the server 12 according to an embodiment of the present disclosure.

In the example illustrated in FIG. 9, an English vocabulary group including multiple English vocabularies (dog, cat, this, and day) is used as the existing vocabulary group 111-1.

In the example illustrated in FIG. 9, an English vocabulary group including multiple Japanese vocabularies (inu, neko, kore, and hi) is used as the new vocabulary group 111-2.

In other words, in the example illustrated in FIG. 9, the existing vocabulary group 111-1 and the new vocabulary group 111-2 are generated in units of languages.

FIG. 10 is a diagram illustrating a second example of the vocabulary group 111-1 and the vocabulary group 111-2 included in the server 12 according to an embodiment of the present disclosure.

In the example illustrated in FIG. 10, a vocabulary group of daily terms including vocabularies of multiple daily terms (walk, bucket, and blanket) is used as the existing vocabulary group 111-1.

In the example illustrated in FIG. 10, a vocabulary group of business terms including vocabularies of multiple business terms (gross profit, business, and KPI) is used as the new vocabulary group 111-2.

In other words, in the example illustrated in FIG. 10, the existing vocabulary group 111-1 and the new vocabulary group 111-2 are generated in units of terms.

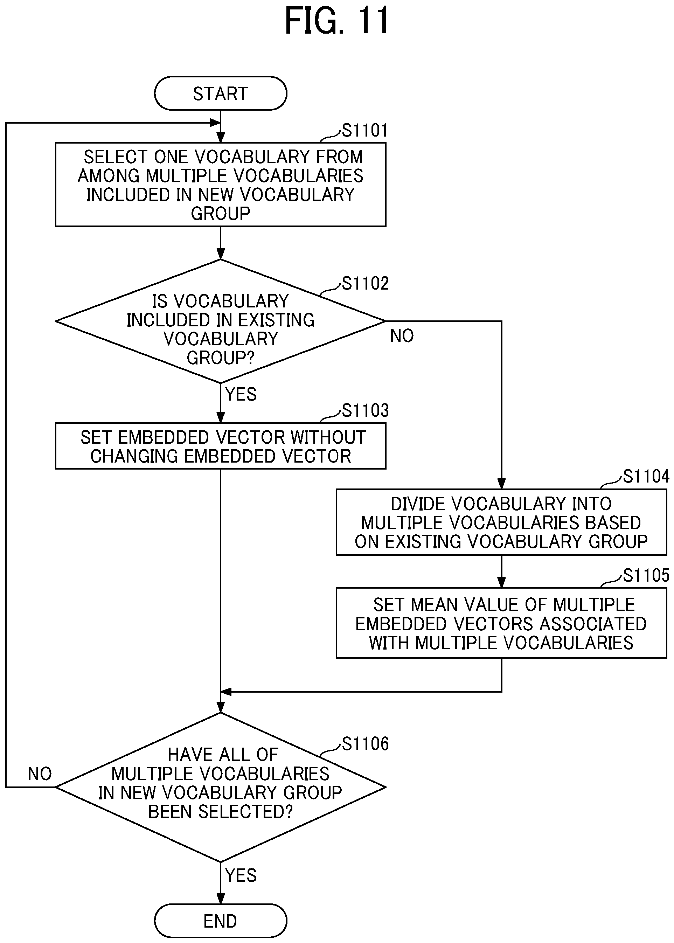

FIG. 11 is a flowchart of a procedure of vector setting processing performed by the generation unit 103 included in the server 12 according to an embodiment of the present disclosure. For example, the generation unit 103 performs the series of processing illustrated in FIG. 11 after the generation unit 103 generates the new vocabulary group 111-2.

In step S1101, the generation unit 103 selects one vocabulary from among multiple vocabularies included in the new vocabulary group 111-2.

Subsequently, in step S1102, the generation unit 103 determines whether the vocabulary selected in step S1101 is included in the existing vocabulary group 111-1.

In step S1103, when the generation unit 103 determines that the vocabulary selected in step S1101 is included in the existing vocabulary group 111-1 in step S1102 (YES in step S1102), the generation unit 103 sets an embedding vector associated with the vocabulary in an existing LLM 120-1 to the identifier of the vocabulary selected in step S1101 in a new LLM 120-2 without changing the embedding vector. Then, the generation unit 103 proceeds the operation to step S1106.

In step S1104, when the generation unit 103 determines that the vocabulary selected in step S1101 is not included in the existing vocabulary group 111-1 in step S1102 (NO in step S1102), the generation unit 103 divides the vocabulary selected in step S1101 into multiple vocabularies based on the existing vocabulary group 111-1 using the existing tokenizer 110-1. In step S1105, the generation unit 103 sets the average value of the multiple embedding vectors associated with the multiple vocabularies acquired in step S1104 in the existing LLM120-1 to the identifier of the vocabulary selected in step S1101 in the new LLM 120-2. Then, the generation unit 103 proceeds the operation to step S1106.

In step S1106, the generation unit 103 determines whether all of the multiple vocabularies included in the new vocabulary group 111-2 have been selected.

When the generation unit 103 determines that all of the multiple vocabularies included in the new vocabulary group 111-2 have not been selected in step S1106 (NO in step S1106), the generation unit 103 returns the operation to step S1101.

When the generation unit 103 determines that all of the multiple vocabularies included in the new vocabulary group 111-2 have been selected in step S1106 (YES in step S1106), the generation unit 103 ends the series of processing illustrated in FIG. 8.

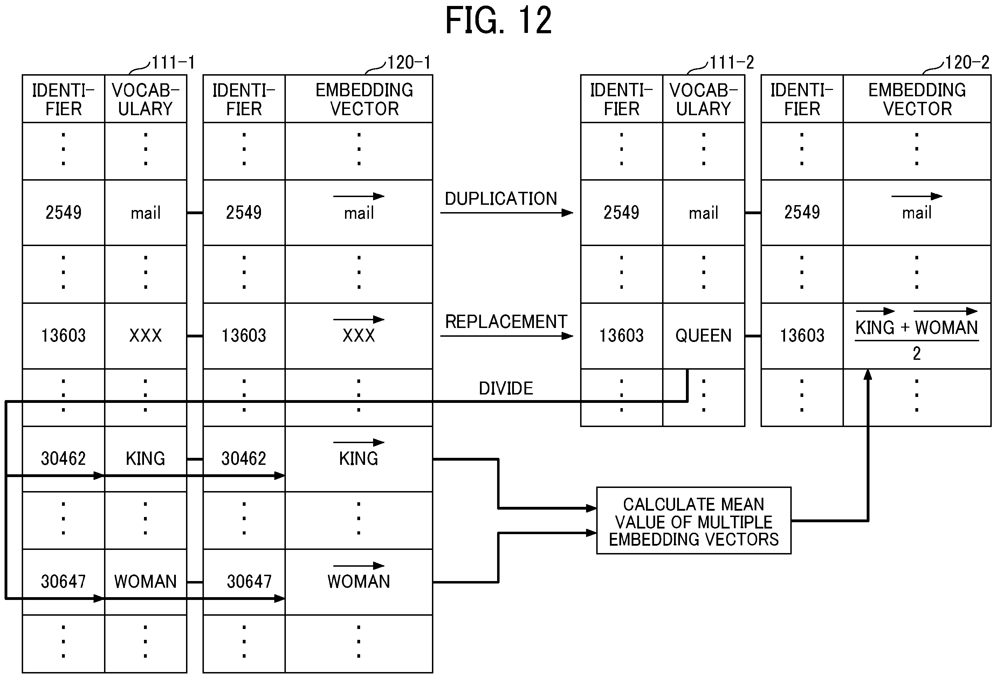

FIG. 12 is a diagram illustrating vector setting processing performed by the generation unit 103 included in the server 12 according to an embodiment of the present disclosure.

As illustrated in FIG. 12, embedding vectors are associated with multiple vocabularies of the existing vocabulary group 111-1 in one-to-one correspondence. Specifically, the embedding vectors of the multiple vocabularies of the existing vocabulary group 111-1 are provided in the existing LLM 120-1 corresponding to the existing vocabulary group 111-1, and are associated with the vocabularies of the existing vocabulary group 111-1 by the identifiers.

Similarly, the embedding vectors are associated with the multiple vocabularies of the new vocabulary group 111-2, in one-to-one correspondence. Specifically, the embedding vectors of the multiple vocabularies of the new vocabulary group 111-2 are provided in the new LLM 120-2 corresponding to the new vocabulary group 111-2, and are associated with the vocabularies of the existing vocabulary group 111-1 by the identifiers.

In the example illustrated in FIG. 12, the generation unit 103 copies a vocabulary "mail", which is included in the existing vocabulary group 111-1 among the multiple vocabularies included in the new vocabulary group 111-2, to the new vocabulary group 111-2 without changing an identifier "2549". At this time, the generation unit 103 associates the embedding vector associated with the identifier "2549" of the vocabulary "mail" in the existing LLM 120-1 with the identifier "2549" of the vocabulary "mail" in the new LLM 120-2 without changing the embedding vector. As a result, the generation unit 103 can efficiently set the embedding vector of the vocabulary common to the existing vocabulary group 111-1 in the new LLM 120-2.

In the example illustrated in FIG. 12, the generation unit 103 adds a vocabulary "queen", which is not included in the existing vocabulary group 111-1 among the multiple vocabularies included in the new vocabulary group 111-2, to the new vocabulary group 111-2 and reuses the identifier "13603" used for the vocabulary "XXX" of the non-common vocabulary group 111-1A of the existing vocabulary group 111-1 (i.e., replacing the vocabulary of the identifier). At this time, the generation unit 103 uses the existing tokenizer 110-1 to divide the vocabulary "queen" into a vocabulary "woman" and a vocabulary "king" based on the existing vocabulary group 111-1. Then, the generation unit 103 associates the average value of the embedding vector associated with the identifier "30647" of the existing vocabulary "woman" in the LLM 120-1 and the embedding vector associated with the identifier "30462" of the existing vocabulary "king" in the LLM 120-1 with the identifier "13603" of the vocabulary "queen" in the new LLM 120-2. As a result, the generation unit 103 can efficiently generate and set the embedding vector of the vocabulary that is not common to the existing vocabulary group 111-1 for the new LLM 120-2.

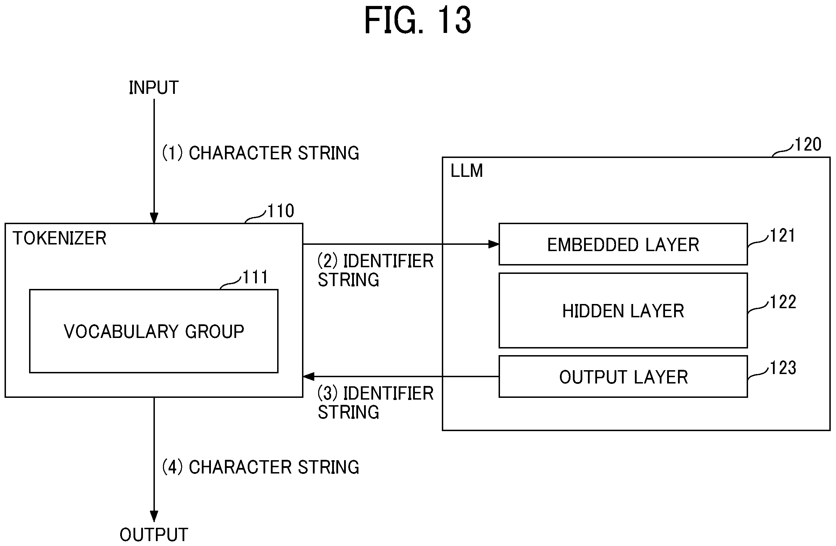

FIG. 13 is a diagram illustrating a first example of a configuration of cooperation between the tokenizer 110 and a machine learning model included in the server 12 according to an embodiment of the present disclosure. FIG. 13 illustrates a configuration in which the tokenizer 110 cooperates with an LLM 120, which is an example of the machine learning model. The LLM 120 may be provided in the server 12 or in a device outside the server 12.

As illustrated in FIG. 13, the LLM 120 includes an embedded layer 121, a hidden layer 122, and an output layer 123.

In the example illustrated in FIG. 13, in step (1), a character string is input to the tokenizer 110. In step (2), the tokenizer 110 converts the input character string into an identifier string based on the vocabulary group 111, and outputs the identifier string to the LLM 120. In step (3), the LLM 120 generates an identifier string following the input identifier string and outputs the identifier string to the tokenizer 110. In step (4), the tokenizer 110 converts the identifier string input from the LLM 120 into a character string based on the vocabulary group 111, and outputs the character string.

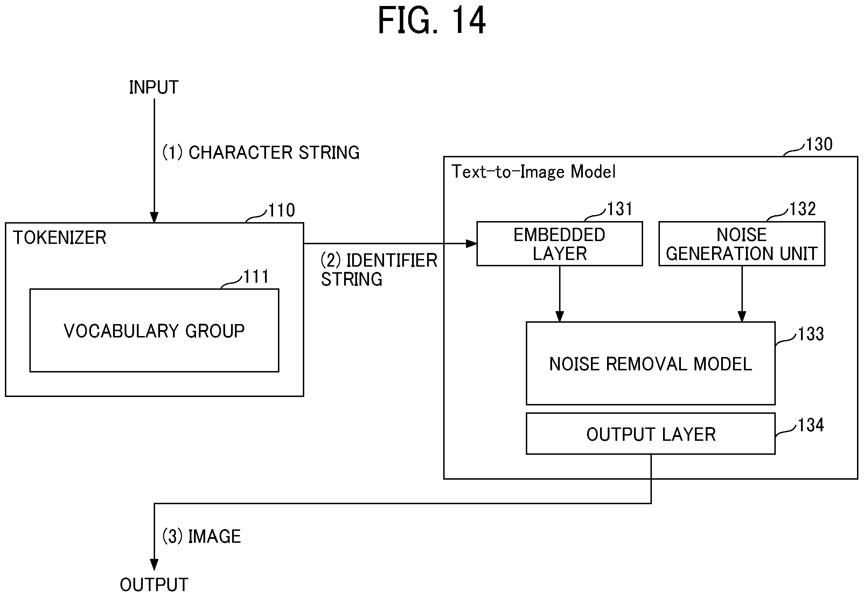

FIG. 14 is a diagram illustrating a second example of a configuration of cooperation between the tokenizer 110 and the machine learning model included in the server 12 according to an embodiment of the present disclosure. FIG. 14 illustrates the configuration in which the tokenizer 110 cooperates with a text-to-image model 130, which is another example of the machine learning model. The text-to-image model 130 may be provided in the server 12 or in an external device of the server 12.

As illustrated in FIG. 14, the text-to-image model 130 includes an embedded layer 131, a noise generation unit 132, a noise removal model 133, and an output layer 134.

In step (1) in FIG. 14, a character string is input to the tokenizer 110. In step (2), the tokenizer 110 converts the input character string into an identifier string based on the vocabulary group 111, and outputs the identifier string to the text-to-image model 130. In step (3), the text-to-image model 130 generates an image based on the input identifier string, and outputs the image.

In FIGS. 13 and 14, the LLM 120 and the text-to-image model 130 are used as examples of the machine learning model. However, the present disclosure is not limited thereto, and image-to-text or music generation artificial intelligence may be used as the machine learning model.

Although some embodiments of the present disclosure have been described in detail above, the present disclosure is not limited to such specific embodiments, and various modifications and changes can be made within the scope of the gist of the invention described in the claims.

The group of apparatuses or devices according to the embodiments of the present disclosure are merely one example of multiple computing environments that implement the embodiments disclosed in the present specification. In some embodiments, the management server 12 includes multiple computing devices, such as a server cluster. The multiple computing devices are configured to communicate with one another through any type of communication link including, for example, a network or a shared memory, and perform the processes disclosed in the present specification.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A character string dividing apparatus comprising:
a generation unit (103) configured to generate a new vocabulary group based on an existing vocabulary group, the existing vocabulary group including a plurality of vocabularies each being associated with an identifier;
an acquisition unit (101) configured to acquire a character string;
a character string dividing unit (110-1) configured to divide the character string into a plurality of vocabularies based on at least one of the existing vocabulary group and the new vocabulary group; and
an output unit (102) configured to output the plurality of vocabularies of the character string,
wherein, in generating the new vocabulary group, the generation unit (103) is configured to:
determine whether a vocabulary of a plurality of vocabularies included in the new vocabulary group is commonly included in the existing vocabulary group and the new vocabulary group; and
associate an embedding vector associated with the vocabulary included in the existing vocabulary group with the vocabulary included in the new vocabulary group without changing the embedding vector based on a determination indicating that the vocabulary is commonly included in the existing vocabulary group and the new vocabulary group.

2. The character string dividing apparatus according to claim 1,
wherein, among the plurality of vocabularies included in the new vocabulary group, the generation unit (103) is configured to
copy a vocabulary commonly included in the existing vocabulary group and the new vocabulary group to the new vocabulary group without changing the identifier, and
assign a new identifier to a vocabulary that is included in the new vocabulary group but not included in the existing vocabulary group and adds the vocabulary to the new vocabulary group.

3. The character string dividing apparatus according to claim 1,
wherein, in a case where a first vocabulary included in the new vocabulary group is not included in the existing vocabulary group,
the generation unit (103) is configured to assign an identifier of a second vocabulary included in the existing vocabulary group but not included in the new vocabulary group to the first vocabulary included in the new vocabulary group, and
add the first vocabulary to the new vocabulary group.

4. The character string dividing apparatus according to claim 1,
wherein, among the plurality of vocabularies included in the new vocabulary group, the generation unit (103) is configured to divide a vocabulary not commonly included in the existing vocabulary group into a plurality of vocabularies based on the existing vocabulary group, and
associate an average value of a plurality of embedding vectors associated with the plurality of vocabularies included in the existing vocabulary group with the vocabulary of the new vocabulary group.

5. The character string dividing apparatus according to claim 1,
wherein the existing vocabulary group and the new vocabulary group are generated in units of languages.

6. The character string dividing apparatus according to claim 1,
wherein the existing vocabulary group and the new vocabulary group are generated in units of terms.

7. The character string dividing apparatus according to claim 1,
wherein the character string dividing unit (110-1) is configured to output the identifiers of the plurality of vocabularies included in at least one of the existing vocabulary group and the new vocabulary group to a machine learning model and acquire a processing result from the machine learning model for the identifiers of the plurality of vocabularies included in the at least one of the existing vocabulary group and the new vocabulary group.

8. A character string dividing system comprising:
a generation unit (103) configured to generate a new vocabulary group based on an existing vocabulary group, the existing vocabulary group including a plurality of vocabularies each being associated with an identifier;
an acquisition unit (101) configured to acquire a character string;
a character string dividing unit (110-1) configured to divide the character string into a plurality of vocabularies based on at least one of the existing vocabulary group and the new vocabulary group; and
an output unit (102) configured to output the plurality of vocabularies of the character string,
wherein, in generating the new vocabulary group, the generation unit (103) is configured to:
determine whether a vocabulary of a plurality of vocabularies included in the new vocabulary group is commonly included in the existing vocabulary group and the new vocabulary group; and
associate an embedding vector associated with the vocabulary included in the existing vocabulary group with the vocabulary included in the new vocabulary group without changing the embedding vector based on a determination indicating that the vocabulary is commonly included in the existing vocabulary group and the new vocabulary group.

9. A method (110-1) for generating a vocabulary group, the method comprising:
generating a new vocabulary group based on an existing vocabulary group including a plurality of vocabularies each being associated with an identifier, the new vocabulary group being used when a character string is divided into a plurality of vocabularies,
wherein the generating the new vocabulary group includes:
determining whether a vocabulary among a plurality of vocabularies included in the new vocabulary group is commonly included in the existing vocabulary group and the new vocabulary group; and
associating an embedding vector associated with the vocabulary included in the existing vocabulary group with the vocabulary included in the new vocabulary group without changing the embedding vector based on a determination indicating that the vocabulary is commonly included in the existing vocabulary group and the new vocabulary group.

10. A carrier medium storing computer-readable program code that, when executed by a computer, causes the computer to perform the method of claim 9.
